# FASCICULE DE BREVET EUROPEEN

(11) **EP 4 076 901 B1**
(45) Date de publication et mention de la délivrance du brevet: **11.09.2024**
(21) Numéro de dépôt: 20830212.5
(22) Date de dépôt: 18.12.2020
(51) Int. Cl.: B29C 49/64, B29C 49/68, B29B 11/14, B29C 49/02

(54) **UNITE DE CHAUFFE DE PREFORMES EN MATIERE PLASTIQUE, COMPRENANT UN DISPOSITIF DE PROTECTION DE COLS DES PREFORMES**
VORRICHTUNG ZUM ERWÄRMEN VON KUNSTSTOFFROHLINGEN, DIE EINE VORRICHTUNG ZUM SCHUTZ VON VORFORMLINGSHÄLSEN UMFASST
UNIT FOR HEATING PLASTIC PREFORMS, COMPRISING A DEVICE FOR PROTECTING PREFORM NECKS

(30) Priorité: 20.12.2019 FR 1915080
(43) Date de publication de la demande: 26.10.2022
(73) Titulaire: Sidel Participations, 76930 Octeville-sur-Mer (FR)
(72) Inventeur: FEVRE, Sébastien, 76930 Octeville-sur-Mer (FR); MORIN, Stéphane, 76930 Octeville-sur-Mer (FR)
(74) Mandataire: Sidel Group
(86) Numéro de dépôt international: PCT/EP2020/087175
(87) Numéro de publication internationale: WO 2021/123275

(56) Documents cités:
- AT-U1- 520
- FR-A1- 2 950 283
- FR-A1- 2 950 284
- US-A1- 2019 047 206

## Description

Le domaine de l'invention est celui de la conception et de la fabrication des récipients en matière plastique.

Plus précisément, l'invention concerne un dispositif de protection de cols de préformes pour unité de chauffe de préformes.

Classiquement, les récipients en matière plastique peuvent être obtenus par chauffage d'une préforme en matière plastique supérieure à une température de transition vitreuse.

Une préforme comprend ordinairement :
- un corps, de forme sensiblement cylindrique de révolution autour d'un axe central ;
- un col, qui s'étend dans le prolongement du corps à partir d'une première extrémité de celui-ci, le col étant séparé du corps par une collerette ;
- un fond, qui ferme le corps à une seconde extrémité de celui-ci.

Par analogie :
- le corps de la préforme devient le corps du récipient ;
- le col de la préforme demeure inchangé au cours du processus de formage du récipient ;
- le fond de la préforme devient le fond du récipient.

Les préformes chauffées sont insérées dans un moule à l'empreinte du récipient final ou d'un récipient intermédiaire, pour y être soufflées par injection d'un fluide. Plus précisément, de l'air est injecté dans la préforme pour la déformer et étirer la matière plastique jusqu'à ce qu'elle vienne au contact des parois du moule.

Pour chauffer les préformes, des unités de chauffe, également appelées « fours », sont utilisées.

Les préformes circulent au défilé dans les unités de chauffe en étant maintenues par une tournette, c'est-à-dire un doigt venant en prise avec le col, et plus précisément avec l'intérieur du col.

Ces unités de chauffe utilisent des matrices de sources lumineuses, généralement des diodes laser ou des lampes halogènes, qui émettent un rayonnement visant à chauffer la matière plastique, et donc à la ramollir pour en favoriser son étirement et sa déformation dans le moule.

Lors de la chauffe des préformes, le col des préformes, qui est généralement à la forme du col du récipient final, n'a pas vocation à être chauffé.

En effet, une chauffe du col entraîne un risque de déformation qui peut empêcher la bonne utilisation du récipient final, par exemple empêcher la mise en place d'un bouchon pour obturer le récipient une fois rempli.

Pour cela, lorsque les préformes sont chauffées, il est nécessaire de protéger leur col du rayonnement des sources lumineuses et de l'air chaud provenant des sources lumineuses. En d'autres termes, il est nécessaire de créer une chambre pour confiner le rayonnement lumineux et l'air chaud présents dans l'unité de chauffe.

Une technique largement répandue consiste à positionner les préformes col vers le bas et de faire dépasser le col des préformes hors de l'unité de chauffe.

Des écrans réfléchissants peuvent être utilisés pour réfléchir le rayonnement lumineux vers l'intérieur de l'unité de chauffe, et donc le confiner dans l'unité de chauffe.

Par ailleurs, la conduction thermique qui assure un réchauffement de la matière depuis le bas vers le haut n'a pas d'effet sur une telle chauffe des préformes.

Toutefois, un tel positionnement n'est pas sans inconvénient.

En effet, pour être soufflées, les préformes sont introduites dans les moules en étant positionnées col en haut.

Dès lors, il est nécessaire de retourner les préformes entre l'unité de chauffe et les moules puisque dans l'unité de chauffe les préformes sont positionnées col en bas.

Outre le temps et les moyens mécaniques nécessaires au retournement des préformes, l'étape de retournement peut provoquer un risque d'endommagement des préformes.

En effet, les cadences élevées de fabrication obligent un retournement rapide des préformes dont la matière plastique est assez ramollie pour permettre leur déformation. Ainsi, la force centrifuge liée au retournement des préformes à grande vitesse engendre des contraintes sur la préforme pouvant entraîner un dévêtissage de la préforme de l'organe de préhension qui la porte.,

Une autre technique connue consiste à positionner les préformes dans l'unité de chauffe en ayant le col en haut.

Cela permet d'éviter l'étape de retournement des préformes et donc le risque d'endommagement des préformes.

Pour éviter que le col des préformes ne chauffe, des réflecteurs, également appelés écailles, sont intercalés entre les préformes et positionnés sous la collerette, c'est-à-dire du côté du corps de la préforme.

Toutefois, de tels réflecteurs obligent à un retrait des préformes selon un mouvement de translation le long de l'axe de révolution du corps.

Dès lors, il est nécessaire de saisir les préformes par leur corps, ce qui peut provoquer une déformation du corps. Cette déformation peut alors engendrer un risque de détérioration des récipients lors de leur formage dans les moules ou, dans le pire des cas, rendre impossible le formage des récipients.

Par ailleurs, la préhension des préformes par leur corps peut entraîner un refroidissement localisé dans la matière plastique, par exemple due à un gradient thermique entre la température des organes de préhension et la température de la préforme.

De tels refroidissements localisés peuvent rendre difficile le soufflage de la matière plastique dans le moule et, dans le pire des cas engendrer la fabrication d'un récipient impropre à sa mise dans le commerce, notamment si le récipient est destiné à contenir une boisson du type carbonatée.

En effet, le gaz carbonique contenu dans la boisson provoque la mise sous pression interne du récipient. Les amorces de rupture, qui engendrent des zones de faible résistance mécanique, peuvent alors se transformer en fissurations du récipient et causer son explosion.

Par ailleurs, le retrait des préformes selon une unique translation demande de bénéficier d'un grand débattement en hauteur, c'est-à-dire selon l'axe du corps des préformes. L'unité de chauffe doit donc présenter des dimensions assez importantes pour permettre ce débattement. Des exemples d'unités de chauffage pour préformes conformes au préambule de la revendication 1 sont essentiellement divulgués dans les publications FR2950283A1, AT520U1 et US2019/047206A1.

L'invention a notamment pour objectif de palier les inconvénients de l'art antérieur.

Plus précisément, l'invention a pour objectif de proposer une solution permettant de protéger les cols des préformes lors de la chauffe, ainsi que l'intégrité des corps lors du retrait des préformes de l'unité de chauffe.

L'invention a également pour objectif de fournir une telle solution qui assure un retrait aisé des préformes hors de l'unité de chauffe.

L'invention a encore pour objectif de fournir une telle solution qui permette de maintenir les cadences élevées de l'art antérieur tout en limitant le risque d'endommagement des préformes lors de leur retrait.

L'invention a en outre pour objectif de fournir une telle solution qui permette de réduire l'encombrement d'une unité de chauffe comparativement à une unité de chauffe selon l'art antérieur.

Ces objectifs, ainsi que d'autres qui apparaîtront par la suite, sont atteints grâce à l'invention selon la revendication 1.

Une telle unité de chauffe permet de protéger efficacement le col des préformes lors de la chauffe du corps tout en facilitant l'entrée et la sortie des préformes dans ou hors de l'unité de chauffe.

En effet, la position d'ouverture des écailles permet de faciliter la mise en place de moyens transversaux de retrait ou d'insertion des préformes pour faciliter leur retrait ou leur insertion dans l'unité de chauffe.

En outre, cela permet une réduction de l'encombrement de l'unité de chauffe par rapport à l'art antérieur puisque les organes de préhension ne sont pas forcés de devoir se déplacer avec les préformes pour atteindre les moyens transversaux de retrait ou d'insertion situés par exemple en dessous ou au-dessus des supports.

En outre, cela permet d'augmenter les cadences de production puisque le retrait des préformes peut se faire au fur et à mesure du défilement des préformes, c'est-à-dire de manière transversale.

L'unité de chauffe comprend une chaîne équipée d'une pluralité de maillons, les supports étant montés chacun sur un des maillons et comprend une roue d'entrainement de la chaîne des supports, la roue présentant un axe principal et chaque écaille présentant un bord interne s'étendant par rapport au chemin de convoyage des préformes du côté de l'axe de rotation principal et un bord externe opposé au bord interne. Dans ce premier mode, pour chaque écaille, l'axe de pivot est situé à proximité du bord interne de l'écaille, et les moyens d'entrainement en rotation de l'organe d'actionnement comprennent une liaison mécanique directe entre l'organe d'actionnement et un deuxième support contigu au premier support.

On entend par « liaison mécanique directe » un lien de solidarité mécanique entre une portion de l'organe d'actionnement et une portion du deuxième support sans passer par un ou plusieurs organes mécaniques qui seraient mobile par rapport à l'un et à l'autre. Autrement dit, la liaison mécanique directe ne passe pas par les maillons de la chaîne. Toutefois, la liaison mécanique directe peut passer par un entretoise, un pallier, une rondelle, un revêtement de surface intermédiaires, ou équivalents.

Cela permet, de manière mécanique et automatique, de pouvoir positionner les écailles dans leur position d'ouverture ou de protection lors du déplacement des supports la zone d'admission/libération à la zone de maintien uniquement.

Chaque écaille, la liaison mécanique de l'organe d'actionnement avec le deuxième support comprend une liaison pivot glissant, située à proximité du bord externe de l'écaille.

La liaison pivot glissant est notamment composée d'un mouvement de rotation et d'un mouvement de translation de l'organe d'actionnement par rapport au deuxième support, selon deux axes de déplacement différents.

Cette liaison pivot permet de pouvoir générer un mouvement de translation curviligne à l'écaille, ce qui favorise son ouverture et permet notamment d'offrir un écartement entre les bords externes de deux écailles contiguës supérieures à l'écartement des bords internes de deux écailles contiguës dans la position d'ouverture des écailles. Cela permet alors de faciliter une insertion ou un retrait transversal des préformes.

Avantageusement, la liaison pivot glissant est réalisée par une lumière oblongue pratiquée sur l'organe d'actionnement et un doigt cylindrique logé dans la lumière oblongue et porté par un deuxième support.

Une telle architecture permet une réalisation simple et précise de la liaison pivot glissant. En outre, cette liaison, purement mécanique, facilite le déplacement des écailles seulement grâce au déplacement des supports.

Selon un deuxième mode de réalisation avantageux, pour chaque écaille, l'unité de chauffe comprend un organe moteur coopérant avec l'organe d'actionnement pour déplacer l'écaille de sa position de protection à sa position d'ouverture, ou inversement.

Dans ce cas, l'organe d'actionnement n'est alors relié à un support que par sa liaisons pivot, ce qui permet d'assurer, indépendamment de la position des supports contigus, le déplacement des écailles de leur position d'ouverture à leur position de protection ou inversement.

Dans ce cas, chaque organe moteur comprend un chemin de cames solidaire d'un bâti et un galet suivant le chemin de cames et relié à l'organe d'actionnement.

La coopération entre le chemin de cames et le galet permet de réaliser le déplacement ou d'initier la rotation de l'organe d'actionnement par rapport au support sur lequel il est monté à rotation, de manière précise en fonction de la position dudit support sur le bâti.

De préférence, chaque galet est monté à rotation sur l'organe d'actionnement avec lequel il coopère.

Ce montage à rotation permet de favoriser le déplacement des écailles sous la forme d'une translation curviligne, ce qui favorise l'obtention d'une position d'ouverture des écailles les unes par rapport aux autres de manière précise, au moment voulu, cela afin de faciliter le retrait ou l'insertion des préformes de manière transversale.

Selon un aspect avantageux, chaque écaille est montée sur un organe d'actionnement par des moyens de fixation amovibles.

II est ainsi possible de pouvoir retirer les écailles de l'unité de chauffe en cas de besoin, par exemple si le col des préformes doit également être chauffé ou alors pour une maintenance de la machine par exemple.

Préférentiellement, les moyens de fixation amovibles comprennent :
- au moins un perçage de fixation pratiqué dans l'organe d'actionnement, et
- au moins un bras solidaire de l'écaille, et destiné à être inséré dans le perçage de fixation.

Une telle architecture favorise un montage rapide ou un démontage rapide des écailles sur l'unité de chauffe et plus particulièrement sur l'organe d'actionnement.

Par ailleurs, un tel montage peut être pourvu de moyens détrompeurs pour faciliter et assurer la bonne mise en place des écailles dans l'unité de chauffe.

Préférentiellement, l'organe d'actionnement présente au moins un trou transversal au perçage de fixation et débouchant dans le perçage de fixation, le bras présentant une encoche destinée à venir en regard du trou lorsque le bras est inséré dans le perçage de fixation, et les moyens de fixation amovibles comprennent également un organe de maintien inséré dans le trou, l'organe de maintien étant destiné à coopérer avec l'encoche du bras pour empêcher le retrait du bras hors du perçage de fixation.

Cela permet de réaliser un montage ou démontage rapide et de sécuriser la tenue des écailles sur l'organe d'actionnement grâce à l'organe de maintien.

Ainsi, pour monter ou démonter une écaille, il suffit d'escamoter l'organe de maintien afin d'insérer ou d'extraire le bras de l'écaille hors du perçage de fixation, puis de remettre en place l'organe de maintien.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] est une vue en perspective de dessus d'une partie d'une unité de chauffe de préforme en matière plastique, selon l'invention ;
[Fig. 2] est une vue en perspective de dessus d'une préforme destinée à être chauffée par l'unité de chauffe selon l'invention ;
[Fig. 3] est une vue de dessous d'une partie de l'unité de chauffe selon l'invention, illustrant des écailles de protection dans une première position, dite position d'admission/libération ;
[Fig. 4] est une vue de dessous d'une partie de l'unité de chauffe selon l'invention, illustrant des écailles de protection des préformes dans une deuxième position, dite position de maintien ;
[Fig. 5] est une vue en perspective de dessus d'une écaille et d'un organe d'actionnement sur lequel est montée l'écaille ;
[Fig. 6] est une vue de dessous d'une partie de l'unité de chauffe selon l'invention illustrant un mode de réalisation différent d'entraînement de l'organe d'actionnement.

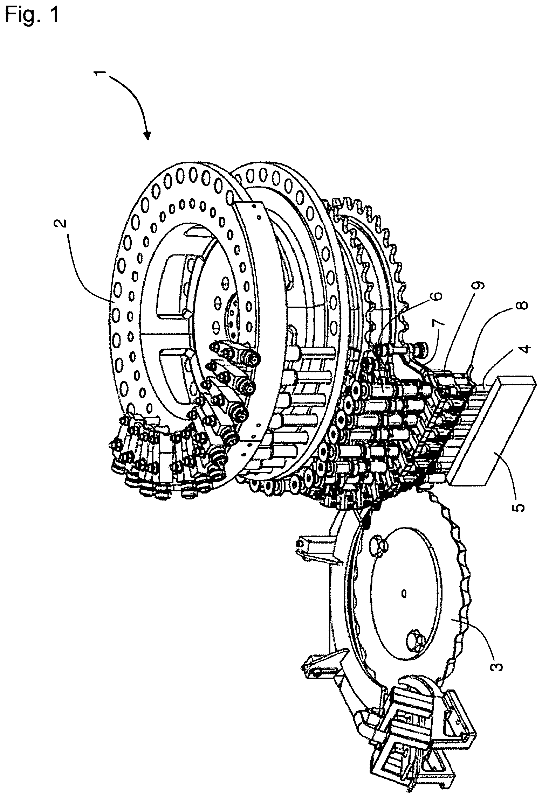

La figure 1 illustre une unité de chauffe 1 selon l'invention.

Plus précisément, une telle unité 1 de chauffe 1 comprend :
- une roue 3 d'alimentation des préformes 4 dans l'unité 1 de chauffe ;
- une source 5 lumineuse d'émission de rayonnement de chauffe des préformes 4 ;
- une chaîne constituée de maillons s'engrenant sur des dents d'une roue 2 d'entrainement de la chaîne, laquelle roue 2 est entraînée en rotation par rapport à un axe principal,
- une pluralité de supports 6 portant chacun un organe 7 de préhension des préformes 4, chaque support 6 étant fixé sur un des maillons de la chaîne, de manière que les supports soient sensiblement parallèles entre eux lorsque les maillons correspondant sont une portion rectiligne de la chaîne, et sont écartés les uns des autres lorsque les maillons tournent autour de la roue 2. ;
- une pluralité d'écailles 8 solidaires des supports 6.

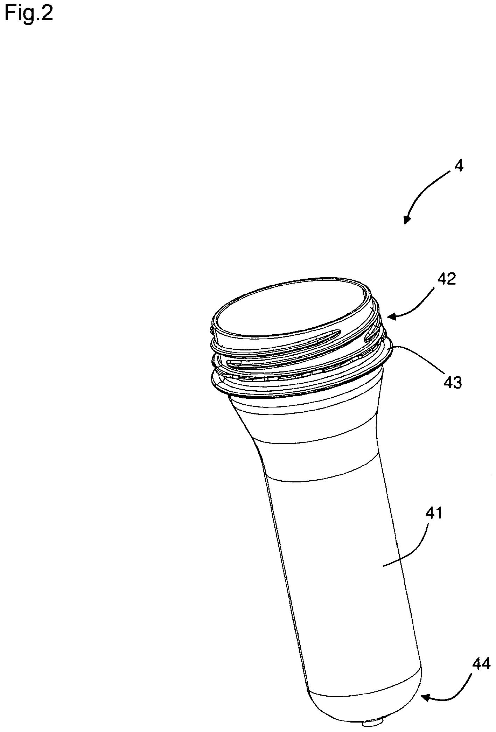

En référence à la figure 2, chaque préforme 4 comprend ordinairement :
- un corps 41, de forme sensiblement cylindrique de révolution autour d'un axe central X ;
- un col 42, qui s'étend dans le prolongement du corps 41 à partir d'une première extrémité de celui-ci, le col 42 étant séparé du corps par une collerette 43 ;
- un fond 44, qui ferme le corps à une seconde extrémité de celui-ci.

Par analogie :
- le corps 41 de la préforme 4 devient le corps du récipient ;
- le col 42 de la préforme 4 demeure inchangé au cours du processus de formage du récipient ;
- le fond 44 de la préforme 4 devient le fond du récipient.

Les organes 7 de préhension, également appelés tournettes, se présentent sous la forme de mandrins destinés à être insérés à l'intérieur des cols 42 des préformes 4.

Par un montage serré dans les cols 42, les organes 7 de préhension sont destinés à prendre et maintenir chaque préforme 4 pour la sortir de la roue 3 d'alimentation et la faire défiler devant la source 5 lumineuse.

Plus particulièrement, chaque tournette est montée sur un support 6.

Chacun des supports 6 est entraîné en déplacement par le maillon de la chaînes auquel ce support est fixé et passe ainsi d'une zone de l'unité de chauffe à l'autre, à savoir :
- une zone d'admission/libération dans laquelle les support 6 sont écartés les uns des autres ;
- une zone de maintien dans laquelle les supports sont rapprochés les uns des autres.

Dans la zone d'admission/libération, les organes 7 de préhension et les supports 6 sont situés à proximité de la roue 3 d'alimentation.

En revanche, dans la zone de maintien, les supports 6 sont distants de la roue 3, notamment pour présenter les préformes 4 face à la source 5 lumineuse.

Le passage d'une position à l'autre des supports 6 se fait notamment de manière classique par un système de chemin de cames et de galets suivant le chemin de cames.

Ainsi, de manière purement mécanique, lors de la mise en route de l'unité 1 de chauffe, les supports 6 défilent. Par le chemin de cames et le galet auquel ils sont chacun rattachés, les support passent de la zone d'admission/libération à la zone de maintien, et inversement.

Les organes 7 de préhension sont quant à eux mobiles par rapport au support 6 entre une position haute et une position basse.

Plus particulièrement, dans leur position haute, les organes 7 de préhension maintiennent les préformes 4 à une hauteur supérieure par rapport à celle dans laquelle elles se trouvent lorsqu'elles sont dans la roue 3 d'alimentation.

Dans leur position basse, les organes 7 de préhension permettent la prise en charge d'une préforme 4 depuis la roue 3 d'alimentation ou la libération de la préforme 4 en sortie de l'unité 1 de chauffe.

Par corrélation, les organes 7 de préhension sont situés dans leur position haute lorsque les supports 6 sont situés dans leur position de maintien. Les organes 7 de préhension sont alors dans leur position basse lorsque les supports 6 sont situés dans leur position d'admission/libération.

Pour permettre le passage des organes 7 de préhension de leur position haute à leur position basse, des moyens mécaniques tels que des liaisons cames/chemin de cames peuvent être notamment prévus.

En variante, un actionneur pneumatique, électronique ou électropneumatique peut également être prévu pour permettre la mobilité des organes 7 de préhension.

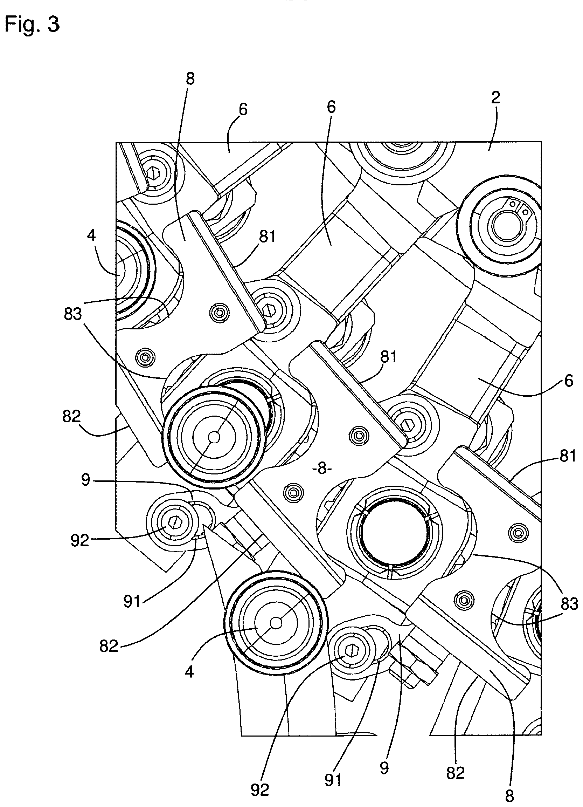

En référence aux figures 3 à 6, les écailles 8 et leur fonctionnement sont à présent décrits.

Les écailles 8 permettent de réfléchir le rayonnement lumineux émis par la source 5 lumineuse en direction du corps 41 des préformes 4, cela afin de protéger le col 42 de la préforme 4.

Pour cela, chaque écaille 8 présente avantageusement un revêtement réfléchissant les rayonnements lumineux. En variante, le matériau constitutif des écailles peut présenter des propriétés de réflexion de la lumière.

En référence aux figures 3, 4 et 5, chaque écaille 8 présente un bord interne 81 pouvant, comme dans l'exemple illustré mais de manière non obligatoire, s'étendre de manière sensiblement parallèle au chemin de convoyage des préformes. Le bord interne 81 est situé du côté du chemin de convoyage des préformes qui est le plus proche de l'axe de rotation principale de la roue 2. Chaque écaille 8 présente également un bord externe 82 opposé au bord interne 81.

Pour être couplée à une préforme 4, chaque écaille 8 présente deux découpes circulaires 83 opposées l'une à l'autre, et situées entre le bord interne 81 et le bord externe 82.

Les écailles 8 sont montées chacune sur au moins un support 6.

Chaque écaille 8 est avantageusement mobile par rapport à son support 6 entre :
- une position de protection dans laquelle elles sont aboutées deux à deux pour former ensemble un entourage destiné à s'étendre autour du corps 41 et sous la collerette 43 d'une préforme 4 ;
- une position d'ouverture dans laquelle elles sont écartées les unes des autres.

Dans leur position de protection, les écailles 8 forment alors une barrière au rayonnement lumineux en direction du col 42.

Pour permettre cette mobilité, chaque écaille 8 est reliée par un organe d'actionnement 9 à au moins un support 6.

L'organe d'actionnement 9 est monté pivotant sur ledit support 6 à proximité du bord interne 81 de l'écaille 8.

Comme décrit ci-après, l'organe d'actionnement 9 tend à entraîner l'écaille 8 depuis sa position d'ouverture à sa position de protection lors d'un passage du support 6 auquel elle est reliée depuis sa position d'admission/libération vers sa position de maintien, et inversement.

Selon le premier mode de réalisation illustré sur les figures 3, 4 et 5, pour chaque écaille 8, l'organe d'actionnement 9 est monté pivotant sur un premier support 6 et relié à un deuxième support 6 contigu au premier support 6 à proximité du bord externe 82 de l'écaille 8.

Plus précisément, l'organe d'actionnement 9 est relié au deuxième support 6 par une liaison pivot glissant.

Il est précisé que la liaison pivot glissant s'entend ici par une liaison permettant à la fois un pivotement de l'organe d'actionnement 9 par rapport au deuxième support 6 mais également une translation de l'organe d'actionnement 9 par rapport audit deuxième support 6.

Cependant, contrairement à la définition mécanique de la liaison pivot glissant, l'axe de translation et l'axe de rotation de l'organe d'actionnement 9 sont, dans le cas présent, différents l'un de l'autre.

Ainsi, bien que le mouvement de l'organe d'actionnement 9 par rapport au deuxième support 6 soit un mouvement de translation curviligne, comparable à une liaison appui plan, en terme mécanique, la liaison entre l'organe d'actionnement 9 et le deuxième support 6 est considéré comme une liaison pivot glissant dans le cas présent.

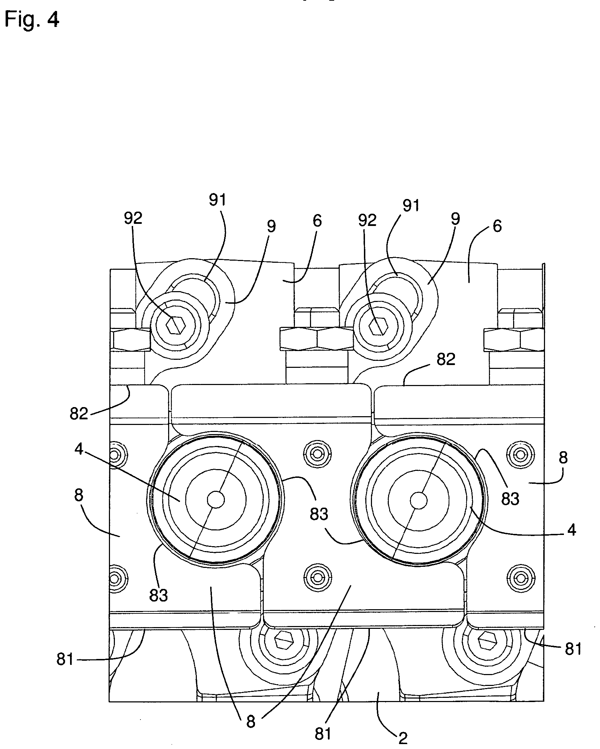

En référence aux figures 3 et 4, la liaison pivot glissant est réalisée par une lumière oblongue 91 pratiquée sur l'organe d'actionnement 9 et un doigt 92 cylindrique logé dans la lumière oblongue 91 et porté par le deuxième support 6.

Selon une variante de réalisation non illustrée sur les figures, la lumière oblongue 91 peut être pratiquée sur le support 6 et le doigt 92 porté par l'organe d'actionnement 9.

Lorsque deux supports 6 contigus passent de la zone d'admission/libération à la zone de maintien, ou inversement, la liaison pivot glissant et la liaison pivot par lesquelles l'organe d'actionnement 9 est relié à chacun des deux supports 6 contigus, provoquent un déplacement de l'écaille 8 selon un mouvement de translation curviligne.

En référence à la figure 3, les écailles 8 sont illustrées dans leur position d'ouverture.

Dans cette position d'ouverture, l'écartement entre les bords internes 81 de deux écailles 8 contiguës est inférieur à l'écartement entre les bords externes 82 des deux mêmes écailles 8 contiguës.

Cela permet notamment de faciliter la prise en charge d'une préforme 4 par les organes 7 de préhension et notamment de permettre un effacement quasiment total des écailles 8 pour permettre le chargement/déchargement des préformes 4 pour leur entrée ou leur sortie dans l'unité 1 de chauffe.

Tel qu'illustré sur la figure 4, deux écailles 8 contiguës sont illustrées dans leur position de protection.

Dans cette position de protection, les bords internes 81 de deux écailles 8 contiguës et les bords externes 82 de deux écailles 8 contiguës sont parallèles les uns aux autres.

En d'autres termes, la distance entre les bords internes 81 et les bords externes 82 de deux écailles 8 contiguës est identique.

Cela permet aux écailles 8 de pouvoir entourer deux à deux une préforme 4 et ainsi de former une barrière au rayonnement lumineux émis par la source 5 lumineuse en direction du col 42.

Le rayonnement lumineux réfléchit alors sur les écailles 8 et est redirigé vers le corps 41 des préformes 4 pour éviter que le col 42 des préformes ne soit également chauffé. Cela augmente de fait le rendement de la chauffe du corps 41.

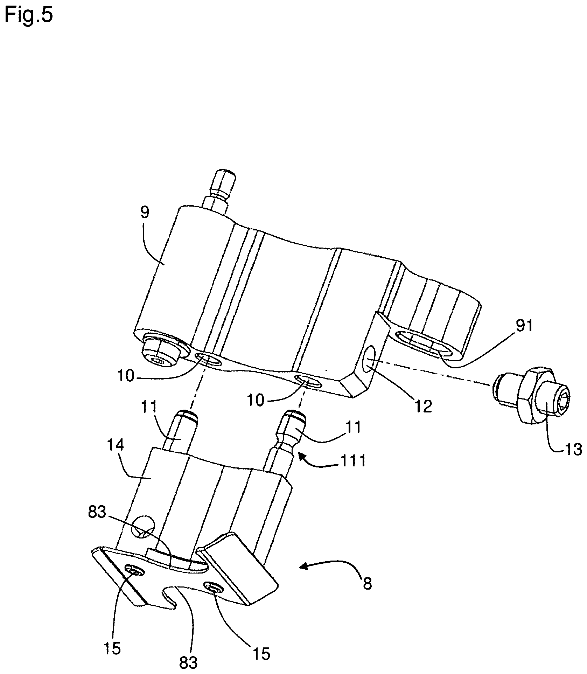

En référence à la figure 5, chaque écaille 8 est montée sur un organe d'actionnement 9 par des moyens de fixation amovibles.

Pour cela, les moyens de fixation amovibles comprennent:
- au moins un perçage 10 de fixation pratiqué dans l'organe d'actionnement 9, et
- au moins un bras 11 solidaire de l'écaille 8 et destiné à être inséré dans le perçage 10 de fixation.

Plus précisément, tel qu'illustré sur la figure 5, les moyens de fixation amovibles comprennent deux perçages 10 de fixation pratiqués dans l'organe d'actionnement 9 et deux bras 11 solidaires de l'écaille 8 et destinés à être insérés chacun dans l'un des perçages 10 de fixation.

Pour éviter tout retrait intempestif de l'écaille, l'organe d'actionnement 9 présente au moins un trou 12 transversal au perçage 10 de fixation et débouchant dans celui-ci.

Plus particulièrement, les moyens de fixation amovibles et l'organe d'actionnement 9 présentent un trou 12 transversal débouchant uniquement dans l'un des perçages 10 de fixation.

Chaque bras 11 présente avantageusement une encoche 111 destinée à venir en regard du trou 12 lorsque le bras 11 est inséré dans le perçage 10 de fixation.

Les moyens de fixation amovibles comprennent également un organe de maintien 13 destiné à être inséré dans le trou 12 transversal.

Cet organe 13 de maintien est destiné à coopérer avec l'encoche 111 du bras 11 pour empêcher le retrait du bras 11 hors du perçage 10 de fixation.

De tels moyens de fixation amovibles permettent notamment de pouvoir réaliser, lors d'une opération de maintenance ou de changement de format de préforme, un remplacement rapide et aisé des écailles 8 lorsque celles-ci sont destinées à être remplacées ou retirées momentanément pour permettre un accès aisé aux supports ou organes 7 de préhension.

De préférence, tel qu'illustré sur la figure 5, chaque écaille 8 comprend une cartouche 14 portant le ou les bras 11. La fixation de la partie réflective de l'écaille 8 sur la cartouche 14 est avantageusement réalisée au moyen de rivets 15.

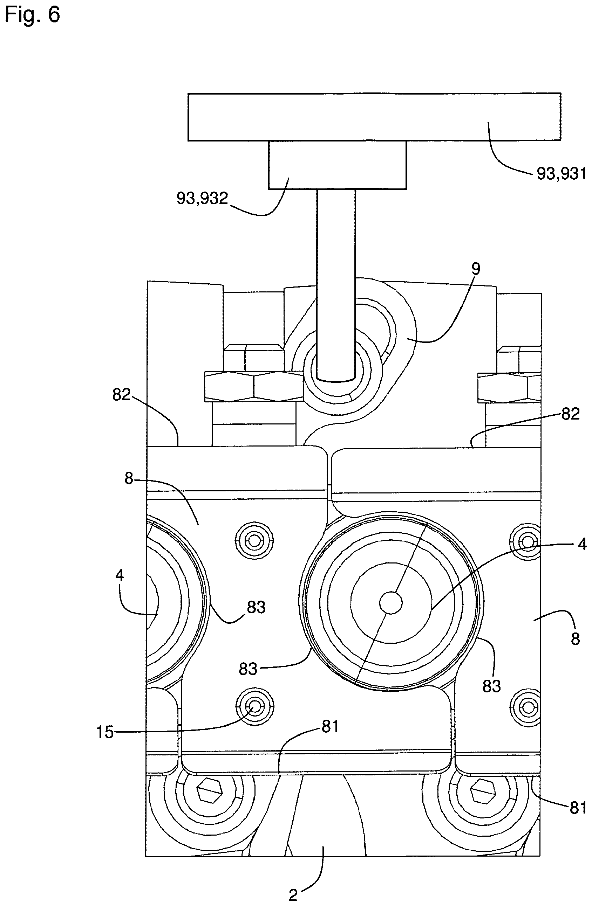

Selon un deuxième mode de réalisation illustré sur la figure 6, l'unité 1 de chauffe comprend un organe moteur 93 solidaire du bâti 2 et destiné à coopérer avec l'organe d'actionnement.

Plus précisément, l'organe moteur 93 comprend un chemin de cames 931 solidaire du bâti 2 et un galet 932 relié à l'organe d'actionnement 9 et destiné à suivre le chemin de cames 931. Plus précisément, chaque galet 932 est monté à rotation sur l'organe d'actionnement 9 avec lequel il coopère.

Ainsi, lorsque les supports 6 se déplacent de leur position d'admission/libération à leur position de maintien, le galet 932, en suivant le chemin de cames 931, provoque la rotation autour de la liaison pivot de l'écaille 8, pour permettre son passage de sa position d'ouverture à sa position de protection ou inversement.

L'unité 1 de chauffe qui vient d'être décrite, permet d'assurer la protection des cols 42 lors de la chauffe du corps 41 des préformes 4, tout en assurant un chargement et un déchargement aisés des préformes 4 avant et après leur chauffe.

Plus précisément, l'écartement des bords externes 82 des écailles 8 dans leur position d'ouverture, permet de faciliter la sortie ou l'entrée des préformes 4 dans l'unité 1 de chauffe, notamment en autorisant une admission ou un retrait des préformes de manière transversale, c'est-à-dire perpendiculairement à l'axe de rotation des tournettes, ou quasiment.

Cela permet alors d'éviter tout risque d'endommagement des préformes 4 qui sont à leur température de transition vitreuse, c'est-à-dire ramollies et facilement déformables en cas de choc par exemple.

Un choc ou une légère déformation pourrait alors entraîner un risque de défaut dans le récipient final une fois formé, voire l'impossibilité de former un récipient à partir de la préforme 4 déformée.

## Revendications

1. Unité (1) de chauffe de préformes (4) en matière plastique comprenant un corps (41) et un col (42) séparés par une collerette (43), l'unité (1) de chauffe comprenant :
- une source (5) lumineuse d'émission d'un rayonnement pour chauffer les préformes (4) ;
- une pluralité de supports (6) portant chacun un organe (7) de préhension des préformes (4), les supports (6) étant mobiles dans l'unité de chauffe de manière que chaque organe de préhension se déplace le long d'un chemin de convoyage des préformes,
l'unité de chauffe présentant :
- une zone d'admission/libération dans laquelle les supports sont écartés les uns des autres ;
- une zone de maintien dans laquelle les supports sont rapprochés les uns des autres, la source étant disposée au voisinage de la zone de maintien, l'unité (1) de chauffe comprenant également une pluralité d'écailles (8) solidaires des supports (6), les écailles (8) étant mobiles entre :
- une position de protection dans laquelle elles sont aboutées deux à deux pour former ensemble un entourage destiné à s'étendre autour du corps (41) et sous la collerette (43) d'une préforme (4) pour former une barrière au rayonnement lumineux en direction du col (42),
- une position d'ouverture dans laquelle elles sont écartées les unes des autres, chaque écaille (8) est reliée par un organe d'actionnement (9) à au moins un des support (6), l'organe d'actionnement (9) étant monté pivotant sur ledit support (6) autour d'un axe de pivot situé à distance du chemin de convoyage des préformes, l'unité de chauffe comprenant en outre des moyens d'entrainement en rotation de l'organe d'actionnement par rapport au support de manière à entraîner l'écaille (8) depuis la position d'ouverture jusqu'à la position de protection lors d'un passage du support (6) auquel elle est reliée depuis la zone d'admission/libération jusqu'à la zone de maintien ;
une chaîne équipée d'une pluralité de maillons, les supports étant montés chacun sur un des maillons et comprend une roue d'entrainement de la chaîne des supports, la roue présentant un axe principal et chaque écaille (8) présentant un bord interne (81) s'étendant par rapport au chemin de convoyage des préformes du côté de l'axe de rotation principal et un bord externe (82) opposé au bord interne (81); pour chaque écaille (8), l'axe de pivot étant situé à proximité du bord interne (81) de l'écaille (8), et les moyens d'entrainement en rotation de l'organe d'actionnement comprennent une liaison mécanique directe entre l'organe d'actionnement et un deuxième support (6) contigu au premier support (6) ;
**caractérisée en ce que**, pour chaque écaille (8), la liaison mécanique de l'organe d'actionnement (9) avec le deuxième support (6) comprend une liaison pivot glissant, située à proximité du bord externe (82) de l'écaille (8).

2. Unité (1) de chauffe selon la revendication précédente, **caractérisée en ce que** la liaison pivot glissant est réalisée par une lumière oblongue (91) pratiquée sur l'organe d'actionnement (9) et un doigt (92) cylindrique logé dans la lumière oblongue (91) et porté par le deuxième support (6).

3. Unité (1) de chauffe selon la revendication 1, **caractérisée en ce que**, pour chaque écaille (8), l'unité (1) de chauffe comprend un organe moteur (93) coopérant avec l'organe d'actionnement (9) pour déplacer l'écaille (8) de sa position de protection à sa position d'ouverture, ou inversement.

4. Unité (1) de chauffe selon la revendication précédente, **caractérisée en ce que** chaque organe moteur (93) comprend un chemin de cames (931) solidaire d'un bâti et un galet (932) suivant le chemin de cames (931), et relié à l'organe d'actionnement (9).

5. Unité (1) de chauffe selon la revendication précédente, **caractérisée en ce que** chaque galet (932) est monté à rotation sur l'organe d'actionnement (9) avec lequel il coopère.

6. Unité (1) de chauffe selon l'une quelconque des revendications précédentes, **caractérisée en ce que** chaque écaille (8) est montée sur l'organe d'actionnement (9) correspondant par des moyens de fixation amovibles.

7. Unité (1) de chauffe selon la revendication précédente, **caractérisée en ce que** les moyens de fixation amovibles comprennent :
- au moins un perçage (10) de fixation pratiqué dans l'organe d'actionnement (9), et
- au moins un bras (11) solidaire de l'écaille (8), et destiné à être inséré dans le perçage (10) de fixation.

8. Unité (1) de chauffe selon la revendication précédente, **caractérisée en ce que** :
- l'organe d'actionnement (9) présente au moins un trou (12) transversal au perçage (10) de fixation et débouchant dans le perçage (10) de fixation ;
- le bras (11) présente une encoche (111) destinée à venir en regard du trou (12) lorsque le bras (11) est inséré dans le perçage (10) de fixation, et **en ce que** les moyens de fixation amovibles comprennent également un organe de maintien (13) inséré dans le trou (12), l'organe de maintien (13) étant destiné à coopérer avec l'encoche (111) du bras (11) pour empêcher le retrait du bras (11) hors du perçage (10) de fixation.

## Patentansprüche

1. Einheit (1) zum Erwärmen von Kunststoffrohlingen (4), die einen Körper (41) und einen Hals (42) umfassen, die durch einen Kragen (43) getrennt sind, wobei die Erwärmungseinheit (1) Folgendes umfasst:
- eine strahlungsemittierende Lichtquelle (5) zum Erwärmen der Rohlinge (4);
- eine Vielzahl von Trägern (6), die jeweils ein Organ (7) zum Greifen der Rohlinge (4) tragen, wobei die Träger (6) in der Erwärmungseinheit beweglich sind, so dass sich jedes Greiforgan entlang eines Förderwegs der Rohlinge bewegt,
wobei die Erwärmungseinheit Folgendes aufweist:
- einen Aufnahme-/Freigabebereich, in dem die Träger voneinander beabstandet sind;
- einen Haltebereich, in dem die Träger aneinander angenähert sind, wobei die Quelle in der Nähe des Haltebereichs angeordnet ist, wobei die Erwärmungseinheit (1) ferner eine Vielzahl von Schuppen (8) umfasst, die fest mit den Trägern (6) verbunden sind, wobei die Schuppen (8) beweglich sind zwischen:
- einer Schutzposition, in der sie paarweise aneinanderstoßen, um gemeinsam eine Umrandung zu bilden, die dazu bestimmt ist, sich um den Körper (41) herum und unter dem Kragen (43) eines Rohlings (4) zu erstrecken, um eine Sperre für die Lichtstrahlung in Richtung des Halses (42) zu bilden,
- einer Öffnungsposition, in der sie voneinander beabstandet sind, wobei jede Schuppe (8) durch ein Betätigungsorgan (9) mit mindestens einem der Träger (6) verbunden ist, wobei das Betätigungsorgan (9) um eine Schwenkachse, die sich in einem Abstand zum Förderweg der Rohlinge befindet, herum schwenkbar am Träger (6) montiert ist, wobei die Erwärmungseinheit ferner Mittel zum Drehantrieb des Betätigungsorgans relativ zum Träger umfasst, um die Schuppe (8) aus der Öffnungsposition in die Schutzposition zu bewegen, wenn sich der Träger (6), mit dem sie verbunden ist, aus dem Aufnahme-/Freigabebereich zum Haltebereich bewegt;
eine Kette, die mit einer Vielzahl von Gliedern ausgestattet ist, wobei die Träger jeweils an einem der Glieder montiert sind, und die ein Antriebsrad für die Kette der Träger umfasst, wobei das Rad eine Hauptachse aufweist und jede Schuppe (8) eine Innenkante (81), die sich relativ zum Förderweg der Rohlinge auf der Seite der Hauptrotationsachse erstreckt, und eine der Innenkante (81) gegenüberliegende Außenkante (82) aufweist, wobei sich für jede Schuppe (8) die Schwenkachse in der Nähe der Innenkante (81) der Schuppe (8) befindet und die Drehantriebsmittel des Betätigungsorgans eine direkte mechanische Verbindung zwischen dem Betätigungsorgan und einem an den ersten Träger (6) angrenzenden zweiten Träger (6) umfassen;
**dadurch gekennzeichnet, dass** für jede Schuppe (8) die mechanische Verbindung des Betätigungsorgans (9) mit dem zweiten Träger (6) eine gleitende Schwenkverbindung umfasst, die sich in der Nähe der Außenkante (82) der Schuppe (8) befindet.

2. Erwärmungseinheit (1) nach dem vorangehenden Anspruch, **dadurch gekennzeichnet, dass** die gleitende Schwenkverbindung durch eine am Betätigungsorgan (9) vorgesehene längliche Öffnung (91) und einen zylindrischen Finger (92), der in der länglichen Öffnung (91) untergebracht ist und vom zweiten Träger (6) getragen wird, hergestellt ist.

3. Erwärmungseinheit (1) nach Anspruch 1, **dadurch gekennzeichnet, dass** die Erwärmungseinheit (1) für jede Schuppe (8) ein Antriebsorgan (93) umfasst, das mit dem Betätigungsorgan (9) zusammenwirkt, um die Schuppe (8) aus ihrer Schutzposition in ihre Öffnungsposition oder umgekehrt zu bewegen.

4. Erwärmungseinheit (1) nach dem vorangehenden Anspruch, **dadurch gekennzeichnet, dass** jedes Antriebsorgan (93) eine Nockenbahn (931), die fest mit einem Gestell verbunden ist, und eine Rolle (932), die der Nockenbahn (931) folgt und mit dem Betätigungsorgan (9) verbunden ist, umfasst.

5. Erwärmungseinheit (1) nach dem vorangehenden Anspruch, **dadurch gekennzeichnet, dass** jede Rolle (932) drehbar am Betätigungsorgan (9), mit dem sie zusammenwirkt, montiert ist.

6. Erwärmungseinheit (1) nach einem der vorangehenden Ansprüche, **dadurch gekennzeichnet, dass** jede Schuppe (8) durch lösbare Befestigungsmittel am entsprechenden Betätigungsorgan (9) montiert ist.

7. Erwärmungseinheit (1) nach dem vorangehenden Anspruch, **dadurch gekennzeichnet, dass** die lösbaren Befestigungsmittel Folgendes umfassen:
- mindestens eine im Betätigungsorgan (9) vorgesehene Befestigungsbohrung (10) und
- mindestens einen fest mit der Schuppe (8) verbundenen Arm (11), der dazu bestimmt ist, in die Befestigungsbohrung (10) eingeführt zu werden.

8. Erwärmungseinheit (1) nach dem vorangehenden Anspruch, **dadurch gekennzeichnet, dass**:
- das Betätigungsorgan (9) mindestens ein Loch (12) aufweist, das quer zur Befestigungsbohrung (10) verläuft und in die Befestigungsbohrung (10) mündet;
- der Arm (11) eine Kerbe (111) aufweist, die dazu bestimmt ist, dem Loch (12) gegenüberzuliegen, wenn der Arm (11) in die Befestigungsbohrung (10) eingeführt ist, und dass die lösbaren Befestigungsmittel ferner ein in das Loch (12) eingeführtes Halteorgan (13) umfassen, wobei das Halteorgan (13) dazu bestimmt ist, mit der Kerbe (111) des Arms (11) zusammenzuwirken, um das Herausziehen des Arms (11) aus der Befestigungsbohrung (10) zu verhindern.

## Claims

1. Heating unit (1) for heating preforms (4) made of plastics material comprising a body (41) and a neck (42) that are separated by a flange (43), the heating unit (1) comprising:
- a radiation-emitting light source (5) for heating the preforms (4) ;
- a plurality of supports (6) each bearing a gripping member (7) for gripping the preforms (4), the supports (6) being movable in the heating unit in such a way that each gripping member moves along a conveying path of the preforms,
the heating unit having:
- an admission/releasing zone in which the supports are moved away from one another;
- a holding zone in which the supports are brought closer together, the source being disposed in the vicinity of the holding zone, the heating unit (1) also comprising a plurality of shells (8) secured to the supports (6), the shells (8) being movable between:
- a protection position in which they abut in pairwise fashion so as to together form a surround intended to extend around the body (41) and under the flange (43) of a preform (4) in order to form a barrier to the light radiation in the direction of the neck (42),
- an open position in which they are moved away from one another, each shell (8) is connected to at least one of the supports (6) by an actuating member (9), the actuating member (9) being mounted on said support (6) so as to pivot about a pivot axis situated at a distance from the conveying path of the preforms, the heating unit further comprising means for driving the actuating member in rotation with respect to the support so as to drive the shell (8) from the open position to the protection position when the support (6) to which said shell is connected is passing from the admission/releasing zone to the holding zone;
a chain equipped with a plurality of links, the supports each being mounted on one of the links, and comprises a drive wheel for driving the chain of supports, the wheel having a main axis and each shell (8) having an internal edge (81) extending, with respect to the conveying path of the preforms, on the side of the main rotational axis, and an external edge (82) opposite to the internal edge (81) ;
for each shell (8), the pivot axis being situated close to the internal edge (81) of the shell (8), and the means for driving the actuating member in rotation comprise a direct mechanical connection between the actuating member and a second support (6) contiguous with the first support (6);
**characterized in that**, for each shell (8), the mechanical connection between the actuating member (9) and the second support (6) comprises a sliding pivot connection, situated close to the external edge (82) of the shell (8) .

2. Heating unit (1) according to the preceding claim, **characterized in that** the sliding pivot connection is realized by an oblong slot (91) made in the actuating member (9) and a cylindrical finger (92) accommodated in the oblong slot (91) and borne by the second support (6).

3. Heating unit (1) according to Claim 1, **characterized in that**, for each shell (8), the heating unit (1) comprises a motor member (93) cooperating with the actuating element (9) for moving the shell (8) from its protection position to its open position, or vice versa.

4. Heating unit (1) according to the preceding claim, **characterized in that** each motor member (93) comprises a cam track (931) secured to a frame, and a roller (932) which follows the cam track (931) and which is connected to the actuating member (9).

5. Heating unit (1) according to the preceding claim, **characterized in that** each roller (932) is mounted so as to rotate on the actuating member (9) with which it cooperates.

6. Heating unit (1) according to any one of the preceding claims, **characterized in that** each shell (8) is mounted on the corresponding actuating member (9) by removable fixing means.

7. Heating unit (1) according to the preceding claim, **characterized in that** the removable fixing means comprise:
- at least one fixing hole (10) made in the actuating member (9), and
- at least one arm (11) which is secured to the shell (8) and which is intended to be inserted in the fixing hole (10) .

8. Heating unit (1) according to the preceding claim, **characterized in that**:
- the actuating member (9) has at least one aperture (12) which is transverse to the fixing hole (10) and which leads into the fixing hole (10);
- the arm (11) has a notch (111) intended to come opposite the aperture (12) when the arm (11) is inserted in the fixing hole (10),
and **in that** the removable fixing means also comprise a holding member (13) inserted in the aperture (12), the holding member (13) being intended to cooperate with the notch (111) of the arm (11) so as to prevent the removal of the arm (11) from the fixing hole (10).
